# EUROPEAN PATENT SPECIFICATION

(11) **EP 4 319 587 B1**
(45) Date of publication and mention of the grant of the patent: **07.10.2026**
(21) Application number: 23794227.1
(22) Date of filing: 08.06.2023
(51) Int. Cl.: A24F 40/40, A24F 40/42, A24F 40/51, A24F 40/53, A24F 40/60, G01F 23/263, A24F 40/10, A24F 40/20, A24F 40/30, A24F 40/70, B29C 45/14

(54) **AEROSOL GENERATING DEVICE**
AEROSOLERZEUGUNGSVORRICHTUNG
DISPOSITIF DE GÉNÉRATION D'AÉROSOL

(30) Priority: 17.06.2022 KR 20220074341; 23.09.2022 KR 20220121149
(43) Date of publication of application: 14.02.2024
(73) Proprietor: KT&G Corporation, Daedeok-gu Daejeon 34337 (KR)
(72) Inventor: KIM, Tae Hun, Yongin-si, Gyeonggi-do 16925 (KR); PARK, Ju Eon, Seongnam-si, Gyeonggi-do 13597 (KR); YOON, Sung Wook, Suwon-si, Gyeonggi-do 16534 (KR); JUNG, Hyung Jin, Seoul 06993 (KR); HAN, Jung Ho, Daejeon 34021 (KR)
(74) Representative: AWA Sweden AB
(86) International application number: PCT/KR2023/007848
(87) International publication number: WO 2023/243932

(56) References cited:
- WO-A1-2017/045897
- WO-A1-2017/051011
- WO-A1-2021/141290
- CN-A- 112 969 374
- KR-B1- 102 295 618
- US-A1- 2020 367 568
- US-A1- 2020 367 568
- US-A1- 2021 015 161
- US-A1- 2021 015 161

## Description

### [Technical Field]

An aerosol generating device capable of measuring the remaining amount of aerosol generating material by using a sensor is provided.

### [Background Art]

Recently, the demand for alternative methods for overcoming the shortcomings of general cigarettes has increased. For example, there is an increasing demand for a system for generating aerosols by heating a cigarette or an aerosol generating material by using an aerosol generating device, rather than by burning cigarettes. Accordingly, research on a heated aerosol generating device is being actively conducted.

An aerosol generating device may generate an aerosol by heating a liquid aerosol generating material stored in a cartridge. For the normal operation of the aerosol generating device, it may be necessary to detect the amount of aerosol generating material remaining in the cartridge.

To inform a user of whether or not an aerosol generating device is usable and provide aerosols of uniform quality, research into technology for accurately measuring the remaining amount of aerosol generating material has been gradually increasing.

The document KR 102 295 618 B1 discusses an aerosol generating device wherein capacitance measurements may be used to determine the total number of puffs that may be generated by the cartridge.

The document US 2020/367568 A1 discusses an aerosol generating device comprising a sensor configured to measure capacitance of electrodes to detect a remaining amount of aerosol generating material

The document CN 112 969 374 A discusses an aerosol generating device which shows the remaining amount of liquid composition using a light source.

### [Disclosure]

### [Technical Problem]

When the remaining amount of aerosol generating material is not detected, it is impossible to check whether an aerosol generating device may be used, and thus, users may feel uncomfortable. Also, because a degree of heating an aerosol generating material may differ according to the remaining amount, aerosols may not be uniformly provided when it is impossible to detect the remaining amount.

An aerosol generating device capable of detecting the remaining amount of aerosol generating material by using a sensor to increase the accuracy of detecting the remaining amount of aerosol generating material is provided.

### [Technical Solution]

An aerosol generating device according to claim 1 is provided.

### [Advantageous Effects]

In an aerosol generating device according to one or more embodiments, a distance between a cartridge and a sensor for measuring the remaining amount of aerosol generating material is minimized, and thus, the accuracy of detecting the remaining amount of aerosol generating material may be improved.

Also, in an aerosol generating device according to one or more embodiments, information regarding the use of an aerosol generating device may be provided to users so that the user convenience may increase, and it is possible for the aerosol generating device to adjust a degree of heating an aerosol generating material based on the measured remaining amount, and thus, an aerosol may be provided more uniformly.

The effects of the embodiments are not limited to the above-described description, and other effects may be clearly understood by one of ordinary skill in the art from the embodiments to be described hereinafter.

### [Description of Drawings]

FIG. 1 is a perspective view of an aerosol generating device according to an embodiment.
FIG. 2 is a schematic cross-sectional view of components of an aerosol generating device, according to an embodiment.
FIG. 3 is an enlarged cross-sectional view of some components of an aerosol generating device, according to an embodiment.
FIG. 4 is an exploded view of some components of an aerosol generating device, according to an embodiment.
FIG. 5A is a perspective view of an example of a cover and a sensor. FIG. 5B shows a front view of the quasi-external cover. FIG. 5C shows a front view of the sensor.
FIG. 6 shows an arrangement of some components of an aerosol generating device, according to an embodiment.
FIG. 7 shows an example of a cartridge and a sensor.
FIG. 8 is a flowchart for explaining an operating method of an aerosol generating device, according to an embodiment.
FIG. 9 is a flowchart for explaining an operating method of an aerosol generating device, according to an embodiment.
FIG. 10 is a block diagram of an aerosol generating device according to another embodiment.

### [Mode for Invention]

Unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, hen an expression such as "at least any one" precedes arranged elements, it modifies all elements rather than each arranged element. For example, the expression "at least any one of a, b, and c" should be construed to include a, b, c, or a and b, a and c, b and c, or a, b, and c.

In an embodiment, an aerosol generating device may be a device that generates aerosols by electrically heating a cigarette accommodated in an interior space thereof.

The aerosol generating device may include a heater. In an embodiment, the heater may be an electro-resistive heater. For example, the heater may include an electrically conductive track, and the heater may be heated when currents flow through the electrically conductive track.

The heater may include a tube-shaped heating element, a plate-shaped heating element, a needle-shaped heating element, or a rod-shaped heating element, and may heat the inside or outside of a cigarette according to the shape of a heating element.

A cigarette may include a tobacco rod and a filter rod. The tobacco rod may be formed of sheets, strands, and tiny bits cut from a tobacco sheet. Also, the tobacco rod may be surrounded by a heat conductive material. For example, the heat conductive material may be, but is not limited to, a metal foil such as aluminum foil.

The filter rod may include a cellulose acetate filter. The filter rod may include at least one segment. For example, the filter rod may include a first segment configured to cool aerosols, and a second segment configured to filter a certain component in aerosols.

In another embodiment, the aerosol generating device may be a device that generates aerosols by using a cartridge containing an aerosol generating material.

The aerosol generating device may include a cartridge that contains an aerosol generating material, and a main body that supports the cartridge. The cartridge may be detachably coupled to the main body, but is not limited thereto. The cartridge may be integrally formed or assembled with the main body, and may also be fixed to the main body so as not to be detached from the main body by a user. The cartridge may be mounted on the main body while accommodating an aerosol generating material therein. However, the present disclosure is not limited thereto. An aerosol generating material may also be injected into the cartridge while the cartridge is coupled to the main body.

The cartridge may contain an aerosol generating material in any one of various states, such as a liquid state, a solid state, a gaseous state, a gel state, or the like. The aerosol generating material may include a liquid composition. For example, the liquid composition may be a liquid including a tobacco-containing material having a volatile tobacco flavor component, or a liquid including a non-tobacco material.

The cartridge may be operated by an electrical signal or a wireless signal transmitted from the main body to perform a function of generating aerosols by converting the phase of an aerosol generating material inside the cartridge into a gaseous phase. The aerosols may refer to a gas in which vaporized particles generated from an aerosol generating material are mixed with air.

In another embodiment, the aerosol generating device may generate aerosols by heating a liquid composition, and generated aerosols may be delivered to a user through a cigarette. That is, the aerosols generated from the liquid composition may move along an airflow passage of the aerosol generating device, and the airflow passage may be configured to allow aerosols to be delivered to a user by passing through a cigarette.

In another embodiment, the aerosol generating device may be a device that generates aerosols from an aerosol generating material by using an ultrasonic vibration method. At this time, the ultrasonic vibration method may mean a method of generating aerosols by converting an aerosol generating material into aerosols with ultrasonic vibration generated by a vibrator.

The aerosol generating device may include a vibrator, and generate a short-period vibration through the vibrator to convert an aerosol generating material into aerosols. The vibration generated by the vibrator may be ultrasonic vibration, and the frequency band of the ultrasonic vibration may be in a frequency band of about 100 kHz to about 3.5 MHz, but is not limited thereto.

The aerosol generating device may further include a wick that absorbs an aerosol generating material. For example, the wick may be arranged to surround at least one area of the vibrator, or may be arranged to contact at least one area of the vibrator.

The aerosol generating device may further include a wick that absorbs an aerosol generating material. For example, the wick may be arranged to surround at least one area of the vibrator, or may be arranged to contact at least one area of the vibrator.

As a voltage (for example, an alternating voltage) is applied to the vibrator, heat and/or ultrasonic vibrations may be generated from the vibrator, and the heat and/or ultrasonic vibrations generated from the vibrator may be transmitted to the aerosol generating material absorbed in the wick. The aerosol generating material absorbed in the wick may be converted into a gaseous phase by heat and/or ultrasonic vibrations transmitted from the vibrator, and as a result, aerosols may be generated.

For example, the viscosity of the aerosol generating material absorbed in the wick may be lowered by the heat generated by the vibrator, and as the aerosol generating material having a lowered viscosity is granulated by the ultrasonic vibrations generated from the vibrator, aerosols may be generated, but is not limited thereto.

In another embodiment, the aerosol generating device is a device that generates aerosols by heating an aerosol generating article accommodated in the aerosol generating device in an induction heating method.

The aerosol generating device may include a susceptor and a coil. In an embodiment, the coil may apply a magnetic field to the susceptor. As power is supplied to the coil from the aerosol generating device, a magnetic field may be formed inside the coil. In an embodiment, the suspector may be a magnetic body that generates heat by an external magnetic field. As the suspector is positioned inside the coil and a magnetic field is applied to the suspector, the suspector generates heat to heat an aerosol generating article. In addition, optionally, the suspector may be positioned within the aerosol generating article.

In another embodiment, the aerosol generating device may further include a cradle.

The aerosol generating device may configure a system together with a separate cradle. For example, the cradle may charge a battery of the aerosol generating device. Alternatively, the heater may be heated when the cradle and the aerosol generating device are coupled to each other.

Hereinafter, the present disclosure will now be described more fully with reference to the accompanying drawings, in which exemplary embodiments of the present disclosure are shown such that one of ordinary skill in the art may easily work the present disclosure. The present disclosure may be implemented in a form that can be implemented in the aerosol generating devices of the various embodiments described above or may be implemented in various different forms, and is not limited to the embodiments described herein.

Hereinafter, embodiments of the present disclosure will be described in detail with reference to the drawings.

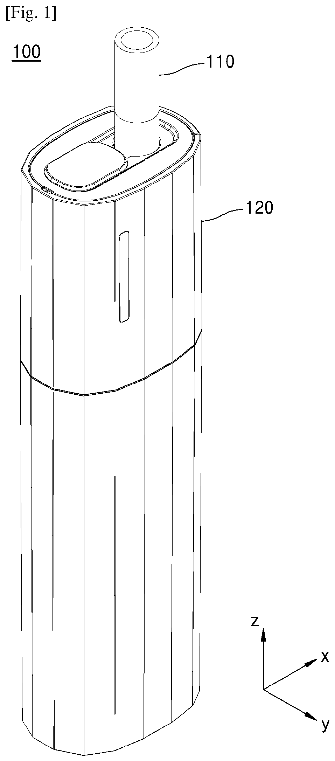

FIG. 1 is a perspective view of an aerosol generating device according to an embodiment.

Referring to FIG. 1, an aerosol generating device 100 according to an embodiment may include a housing 120 in which an aerosol generating article 110 may be inserted.

The housing 120 may form a general exterior of the aerosol generating device 100 and include an inner space (or 'an arrangement space') in which components of the aerosol generating device 100 may be arranged. The drawing only shows that a cross-sectional shape of the housing 120 is a semicircle, but the shape of the housing 120 is not limited thereto. The shape of the housing 120 may generally be a cylinder or a polyprism (e.g., a triangular prism or a rectangular prism).

In the inner space of the housing 120, components for generating an aerosol by heating the aerosol generating article 110 inserted into the housing 120 and components for measuring the remaining amount of aerosol generating material may be arranged, and the components are described below in detail.

The aerosol generating device 100 according to an embodiment may further include a display on which visual information is displayed.

The display may be arranged such that at least some portions of the display may be exposed to an outer side of the housing 120, and the aerosol generating device 100 may provide various pieces of visual information to users through the display.

For example, the aerosol generating device 100 may provide information regarding the remaining amount of aerosol generating material through the display, but the information provided through the display is not limited thereto.

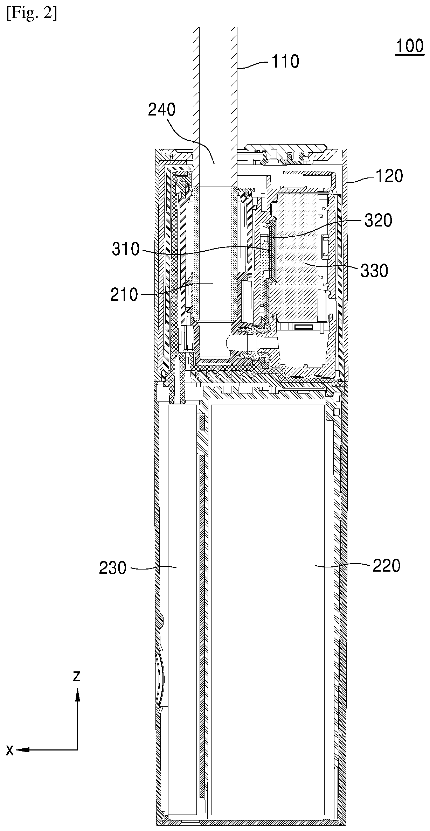

FIG. 2 is a schematic cross-sectional view of components of an aerosol generating device, according to an embodiment.

Referring to FIG. 2, the aerosol generating device 100 according to an embodiment may include the housing 120, a heater 210, a battery 220, a Printed Circuit Board (PCB) 230, a sensor 310, a cover 320, and a cartridge 330.

The housing 120 may form a general exterior of the aerosol generating device 100 and include an inner space in which components of the aerosol generating device 100 may be arranged. For example, in the inner space of the housing 120, the heater 210, the battery 220, the PCB 230, the sensor 310, and the cover 320 may be arranged, but one or more embodiments are not limited thereto.

According to an embodiment, the housing 120 may include an aerosol generating article accommodation space 240 in which the aerosol generating article 110 may be inserted into the housing 120. At least a portion of the aerosol generating article 110 may be inserted or accommodated in the housing 120 through the aerosol generating article accommodation space 240.

The drawing shows that the aerosol generating article accommodation space 240 is formed in a portion of the housing 120 in the z-axis direction, but the arrangement of the aerosol generating article accommodation space 240 is not limited thereto.

The cartridge 330 may include a storage storing an aerosol generating material and an atomizer for vaporizing the aerosol generating material. The aerosol generating device 100 may generate an aerosol from the aerosol generating material by using the cartridge 330. The aerosol generated by the cartridge 330 may be delivered to a user.

The aerosol generating material may include a liquid composition and an aerosol forming agent. The liquid composition may be a liquid including a tobacco-containing material having a volatile tobacco flavor component, or a liquid including a non-tobacco material. For example, the liquid composition may include water, solvents, ethanol, plant extracts, spices, flavorings, or vitamin mixtures. The spices may include menthol, peppermint, spearmint oil, and various fruit-flavored ingredients, and the flavorings may include ingredients capable of providing various flavors or tastes to a user. Vitamin mixtures may be a mixture of at least one of vitamin A, vitamin B, vitamin C, and vitamin E, but are not limited thereto.

The aerosol forming agent may increase the amount of the aerosols provided from the aerosol generating device 100. For example, the aerosol forming agent may include at least one of glycerin, propylene glycol, ethylene glycol, dipropylene glycol, diethylene glycol, triethylene glycol, tetraethylene glycol, and oleyl alcohol, but is not limited thereto. Also, the aerosol forming agent may include other additives, such as flavors, a wetting agent, and/or organic acid, and further include a flavored liquid, such as menthol or a moisturizer.

The storage may store an aerosol generating material. When smoking is performed using the aerosol generating device 100, the aerosol generated from the aerosol generating device 100 may be delivered to the user, and the aerosol generating material stored in the storage may be consumed accordingly; thus, the amount of aerosol generating material remaining in the storage may be reduced.

When the remaining amount of aerosol generating material is changed, it may also be required to change heating characteristics for vaporizing the aerosol generating material. Also, when the remaining amount of aerosol generating material is insufficient, generation of the aerosol may be stopped during smoking. Therefore, it may be required to detect the remaining amount of aerosol generating material inside the storage.

The storage may be in various forms. The storage may include an inner space for storing a liquid aerosol generating material and walls forming the inner space. For example, the storage may have a cylindrical shape with an inner space having a bottom surface, a ceiling, and lateral surfaces. However, one or more embodiments are not limited thereto, and the storage may be embodied in different forms in which a liquid aerosol generating material may be stored.

The atomizer may vaporize the aerosol generating material. The atomizer may vaporize the aerosol generating material by heating the aerosol generating material stored in the storage. For example, the atomizer may transfer the aerosol generating material to the outside of the storage and heat the transferred aerosol generating material.

The atomizer may include a liquid delivery element and a heating element. The liquid delivery element may be configured to deliver the aerosol generating material to the outside of the storage, and the heating element may be configured to heat the aerosol generating material delivered by the liquid delivery element to the outside of the storage. For example, the liquid delivery element may be a wick for delivering the aerosol generating material to the outside of the storage, and the heating element may be a coil for heating the aerosol generating material delivered along the wick.

In detail, the wick may include at least one of a cotton fiber, a ceramic fiber, a glass fiber, and porous ceramic, and may deliver the aerosol generating material due to capillarity. The coil may be wound on the wick and include a conductive filament, for example, a nichrome wire, which generates heat according to provided currents. However, the wick and the coil are not limited thereto.

The cartridge 330 may be detachably attached to the aerosol generating device 100. The cartridge 330 may be coupled to the aerosol generating device 100 to generate an aerosol or separated therefrom. For example, the cartridge 330 may be a consumable that is periodically replaced as the aerosol generating device 100 is used. When the aerosol generating material stored in the storage of the cartridge 330 is completely consumed, the cartridge 330 may be exchanged by the user.

The heater 210 may be arranged in the inner space of the housing 120 and heat the aerosol generating article 110 inserted into the housing 120 through the aerosol generating article accommodation space 240, thereby generating an aerosol.

Vaporized particles generated by heating the aerosol generating article 110 are mixed with the air flowing into the inner space of the housing 120 through the aerosol generating article accommodation space 240, and thus, the aerosol may be generated.

In an embodiment, the heater 210 may include an induction heater. For example, the heater 210 may include a coil (or 'an electrically conductive coil') for generating an alternating magnetic field according to power supply, and a susceptor for generating heat by the alternating magnetic field generated by the coil. The susceptor may be arranged to surround at least a portion of an outer circumferential surface of the aerosol generating article 110 inserted into the housing 120 and thus heat the inserted aerosol generating article 110.

In another embodiment, the heater 210 may include an electro-resistive heater. For example, the heater 210 may include a film heater arranged to surround at least a portion of the outer circumferential surface of the aerosol generating article 110 inserted into the housing 120. The film heater may include an electrically conductive track, and as the film heater generates heat when currents flow through the electrically conductive track, the aerosol generating article 110 inserted into the housing 120 may be heated.

In another embodiment, the heater 210 may include at least one of a needle-type heater, a rod-type heater, and a tube-type heater which may heat the inside of the aerosol generating article 110 inserted into the housing 120. The heater 120 may be inserted into, for example, at least a portion of the aerosol generating article 110 and heat the inside thereof.

However, the heater 210 is not limited to the above embodiments, and the embodiments of the heater 210 may be modified as long as the heater 210 may heat the aerosol generating article 110 to a designated temperature. In the present specification, the expression "designated temperature" may indicate a temperature at which an aerosol generating material included in the aerosol generating article 110 is heated and aerosols are generated. The designated temperature may be a temperature that is set in advance in the aerosol generating device 100, but the temperature may be changed according to a type of aerosol generating device 100 and/or manipulation of the user.

The sensor 310 may measure capacitance of the cartridge 330 to detect the remaining amount of aerosol generating material. The sensor 310 may include at least one pair of electrodes. Two electrodes that form a pair may function as capacitors by respectively storing electric charges having opposite signs. Depending on the permittivity of the material located in a space between two electrodes forming a pair, capacitance of the two electrodes forming the pair may be determined.

The sensor 310 may measure capacitance of each pair of electrodes, and thus may provide information regarding permittivity of materials located in the vicinity of the electrodes. Based on the information regarding the permittivity, a determination as to whether a region in the vicinity of the electrodes is empty or filled with the aerosol generating material may be made, and the remaining amount of aerosol generating material may be detected according to the determination.

The vicinity of electrodes may refer to the vicinity of at least one pair of electrodes. The vicinity of a pair including a first electrode and a second electrode may not indicate only a space between the first electrode and the second electrode, but may also include a space extending from the space to a certain range.

To measure capacitance of the pair including the first electrode and the second electrode, the sensor 310 may apply a current to any one of the first electrode and the second electrode and then may measure a current returning from the other one of the first electrode and the second electrode. The sensor 310 may deduce the capacitance of the pair including the first electrode and the second electrode, based on a relationship between the two currents. The sensor 310 may include the first electrode, the second electrode, and a conducting wire to exchange currents with the first electrode and the second electrode.

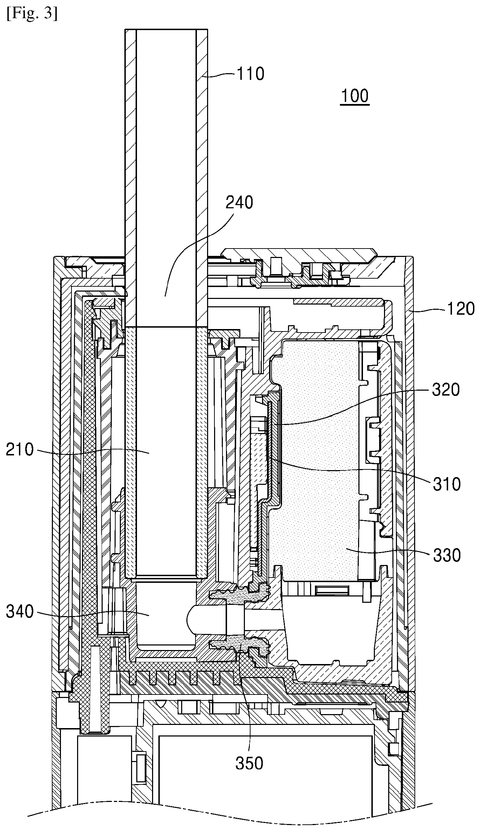

The sensor 310 may include two or more electrodes that form pairs consecutively arranged. The sensor 310 may be arranged to face one side surface of the cartridge 330. A detailed example of the sensor 310 is described below with reference to FIG. 3. The capacitance of the cartridge 330 may be measured by the sensor 310, and the remaining amount of aerosol generating material may be detected based on the measured capacitance. Accordingly, information regarding the remaining amount of aerosol generating material may be provided to the user, and thus, the user convenience may increase. Also, because power supplied to the atomizer may be controlled according to the remaining amount of aerosol generating material, aerosols may be uniformly provided from the aerosol generating device 100, and thus, the smoking quality may be improved.

The cover 320 may protect the sensor 310 from the outside. For example, the cover 320 may be arranged to surround at least a portion of the sensor 310 to prevent the sensor 310 from being exposed to the outside of the housing 120 and thus may protect the sensor 310 from external impact or external foreign materials (e.g., droplets, dust, etc.)

Also, the cover 320 may be arranged such that the sensor 310 may not directly contact the cartridge 330. A detailed example of the cover 320 is described below with reference to FIG. 3.

The aerosol generating device 100 may further include the battery 220 and the PCB 230. The battery 220 and the PCB 230 included in the aerosol generating device 100 may be arranged in a lower portion of the aerosol generating device 100. However, one or more embodiments are not limited thereto, and according to a design, locations of components arranged in the aerosol generating device 100 may change. Also, other general-purpose components than the components shown in FIG. 2 may be further included in the aerosol generating device 100.

The battery 220 may be a lithium iron phosphate (LiFePO₄) battery, but is not limited thereto. For example, the battery may be a lithium cobalt oxide (LiCoO₂) battery, a lithium titanate battery, or the like.

The battery 220 may supply power to the atomizer. When the atomizer includes a wick and a coil, the battery 220 may supply power to the coil wound around the wick and may heat the aerosol generating material delivered along the wick. Also, the battery 220 may supply power, which is required to drive the sensor 310 and the PCB 230, to the sensor 310 and the PCB 230.

The PCB 230 may be implemented as an array of a plurality of logic gates or as a combination of a general-purpose microprocessor and a memory in which a program executable in the microprocessor is stored. The PCB 230 may include a plurality of processing elements. Also, the PCB 230 may be implemented in other forms of hardware.

A processor arranged in the PCB 230 may detect the remaining amount of aerosol generating material, based on the capacitance of the cartridge 330 which is measured by the sensor 310. For example, the processor may receive data regarding the capacitance of the cartridge 330 from the sensor 310 and deduce the remaining amount (or 'a remaining degree') of aerosol generating material stored in the cartridge 330, based on the received data regarding the capacitance of the cartridge 330. The processor may determine a portion of the cartridge 330 in which the aerosol generating material exists, based on the measured capacitance.

The processor may detect the remaining amount of aerosol generating material in various ways. According to the remaining degree of aerosol generating material, a measurement value of the capacitance of the cartridge 330 may be experimentally determined in advance, and the processor may receive the capacitance and output the remaining degree of the aerosol generating material stored in the cartridge 330, based on a database regarding a correspondence between the capacitance and the remaining degree. However, one or more embodiments are not limited thereto, and the processor may deduce the remaining degree of the aerosol generating material stored in the cartridge 330, according to an algorithm for calculating the remaining degree based on the measured capacitance.

The processor may control the power supplied from the battery 220 to the atomizer, based on the remaining amount of aerosol generating material. With regard to the atomizer including the wick and the coil, when the remaining amount of aerosol generating material is large, the speed at which the aerosol generating material is delivered along the wick to the outside of the cartridge 300 may be high. On the other hand, when the remaining amount is low, the speed at which the aerosol generating material is delivered along the wick to the outside of the cartridge 330 may be low.

In this regard, when the speed at which the aerosol generating material is delivered is high, it may be required to supply more power to the coil than when the speed at which the aerosol generating material is delivered is low. The speed at which the aerosol generating material is delivered may be affected by additional factors, such as an internal temperature of the cartridge 330, etc.

When the power supply is not controlled in accordance with the speed at which the aerosol generating material is delivered, the aerosols may be nonuniformly generated from the aerosol generating device 100. Also, when the speed at which the aerosol generating material is delivered is low, the wick may be burned unless the power supply is reduced. In this regard, the processor may control the power supplied to the coil based on the remaining amount of aerosol generating material, and thus, the quality of aerosols generated from the aerosol generating device 100 may be improved.

FIG. 3 is an enlarged cross-sectional view of some components of an aerosol generating device, according to an embodiment. FIG. 3 is a cross-sectional view showing an enlarged upper portion of the aerosol generating device 100 of FIG. 2.

Referring to FIG. 3, the aerosol generating device 100 according to an embodiment may include the housing 120, the heater 210, the sensor 310, the cover 320, the cartridge 330, and a connection passage 340. At least one of the components of the aerosol generating device 100 according to an embodiment may be the same as or similar to at least one of the components of the aerosol generating device 100 of FIG. 2, and repeated descriptions are omitted hereinafter.

The connection passage 340 may be arranged in the inner space of the housing 120 and may fluid-communicate (or fluid-connect) the aerosol generating article 110 with the cartridge 330.

According to an embodiment, the connection passage 340 may be arranged such that the aerosol generated from the cartridge 330 may be externally discharged through the aerosol generating article 110. For example, the connection passage 340 may be formed in an "L" shape and arranged to fluid-communicate the aerosol generating article 110 with the cartridge 330, but the shape of the connection passage 340 is not limited thereto.

The aerosol generating article 110 may be in fluid communication with the cartridge 330 because of the above arrangement of the connection passage 340, and as a result, the aerosol generated from the cartridge 330 may flow into the connection passage 340, pass through the aerosol generating article 110, and then be discharged to the outside of the aerosol generating device 100.

The aerosol generating device 100 may include the sensor 310 and the cover 320 in the housing 120. To increase the measurement accuracy, the sensor 310 for measuring the capacitance of the cartridge 330 may be arranged in a space separated from the cartridge 330 to avoid direct contact with the aerosol generating material. Also, to increase the measurement accuracy, the sensor 310 may be arranged inside the housing 120 such that the sensor 310 may not be directly exposed to the outside.

In an embodiment, the cartridge 330 and the sensor 310 may be arranged in different portions of the inner space of the housing 120. As the cartridge 330 is spaced apart from the sensor 310, the contact of the sensor 310 with the aerosol generating material is reduced, and thus, the sensor 310 may measure the remaining amount of aerosol generating material inside the cartridge 330 more accurately. Also, the sensor 310 may be a predetermined distance apart from the cartridge 330 to increase the measurement accuracy without directly contacting the aerosol generating material.

In another embodiment, the cover 320 may be arranged to surround at least one side surface of the sensor 310. When the sensor 310 is exposed to external impact or external foreign materials (e.g., droplets, dust, etc.), the measurement accuracy of the sensor 310 may decrease. When the cover 320 is arranged to surround both side surfaces of the sensor 310, the sensor 310 may be protected from the external impact or external foreign materials. In addition, even when the cover 320 is arranged to surround one side surface of the sensor 310, the other side surface of the sensor 310 may be arranged to face the inner space of the housing 120, so that the sensor 310 is protected from the external impact or external foreign materials.

In another embodiment, one side surface of the cover 320 may contact the sensor 310, and the other side surface of the cover 320 may contact the cartridge 330. Thus, the sensor 310 may be spaced apart from the cartridge 330 without being directly exposed to the outside. The arrangement of the sensor 310, the cover 320, and the cartridge 330 described above may increase the accuracy of measuring the remaining amount of aerosol generating material by the sensor 310.

The higher the accuracy of measuring the remaining amount of aerosol by the sensor 310 is, the more uniform the generated aerosol may be. The sensor 310 according to an embodiment may measure the remaining amount of aerosol generating material in the cartridge 330, and the processor may supply the power from the battery 220 to the atomizer. Thus, the aerosols with more uniform quality may be generated. As the aerosols with more uniform quality are discharged to the outside through the aerosol generating article 110 along the connection passage 340, the users may have a better smoking experience.

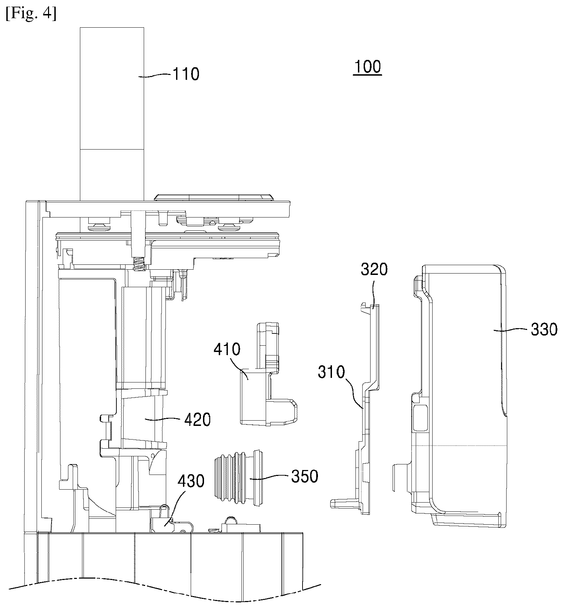

FIG. 4 is an exploded view of some components of an aerosol generating device, according to an embodiment. FIG. 4 is an exploded view of the sensor 310 of the aerosol generating device 100 and some components arranged around the sensor 310.

Referring to FIG. 4, the aerosol generating device 100 according to an embodiment may include the sensor 310, the cover 320, the cartridge 330, a sensor cover 420, an encapsulation portion 350, and an electrical connection member 430 in the inner space of the housing 120.

The cartridge 330 may be detachably attached to the aerosol generating device 100. When the aerosol generating material inside the cartridge 330 is completely consumed, the user may only replace the cartridge 330 with a new one and reuse the aerosol generating device 100.

The housing 120 may include a coupling member 410 for coupling the cartridge 330 to a portion of the housing 120. When the cartridge 330 is coupled to the aerosol generating device 100, the coupling member 410 may be used to fix the cartridge 330 to the aerosol generating device 100.

According to an embodiment, the cover 320 may contact one side surface of the sensor 310 and be arranged between the sensor 310 and the cartridge 330. The coupling member 410 may be used to fix the sensor 310 and the cover 320 to the aerosol generating device 100 together with the cartridge 330.

The sensor cover 420 may be arranged such that some portions of the sensor 310 may not be exposed. When one side surface of the sensor 310 is covered by the cover 320, the other side surface of the sensor 310 may be exposed. In this case, however, the other side surface of the sensor 310 may be covered by the sensor cover 420, and thus the sensor 310 may be protected.

The encapsulation portion 350 may prevent the aerosol, which is generated from the cartridge 330, from leaking while the aerosol moves to the aerosol generating article accommodation space (e.g., the aerosol generating article accommodation space 240 of FIG. 2) through the connection passage 340. For example, the aerosol generated from the cartridge 330 may flow into the connection passage 340 and then moves to the aerosol generating article accommodation space in which the aerosol generating article 110 is accommodated. At least a portion of the aerosol may leak to the outside of the connection passage 340 while the aerosol moves along the connection passage. The aerosol generating device 100 according to an embodiment may prevent the leakage of the aerosol by using the encapsulation portion 350 arranged between the cartridge 330 and the connection passage 340.

The electrical connection member 430 may connect the sensor 310 to the PCB 230 arranged in the lower portion of the housing 120. The PCB 230 may include the processor, and the processor may be connected to the sensor 310 through the electrical connection member 430. Through the above electrical connection, the processor may receive data regarding the capacitance of the cartridge 330 from the sensor and detect the remaining amount of aerosol generating material based on the received data.

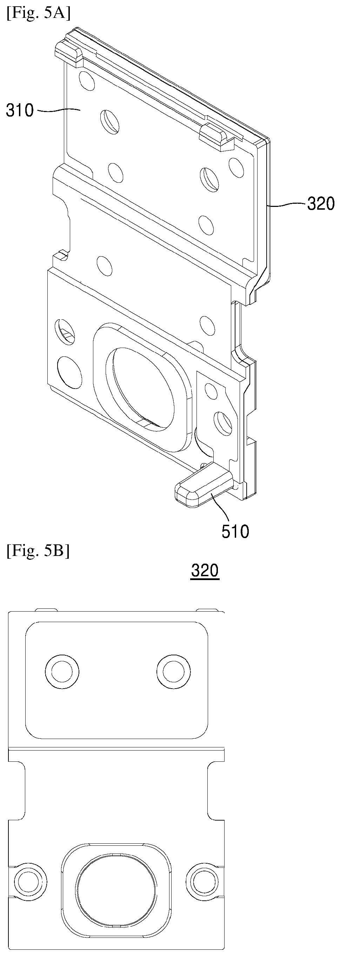

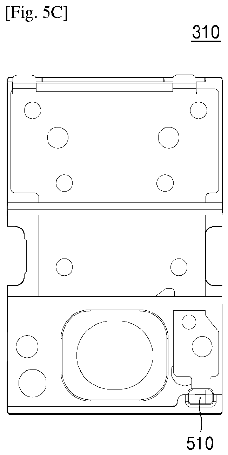

FIG. 5A is a perspective view of an example of a cover and a sensor. FIG. 5B shows a front view of the cover. FIG. 5C shows a front view of the sensor.

Referring to FIG. 5A, the sensor 310 may be arranged such that at least one side surface of the sensor 310 contacts the cover 320. The side surface of the sensor 310 may entirely contact the cover 320. For example, one side surface of the sensor 310 may be entirely surrounded by the cover 320.

According to an embodiment, the sensor 310 and the cover 320 may be integrally formed as a single body. For example, as the sensor 310 is insert-molded (or 'insert-injected') into at least a portion of the cover 320, the sensor 310 and the cover 320 may be integrally formed as a single body. As the sensor 310 is insert-molded into the cover 320, one side surface of the sensor 310 may entirely contact the cover 320. That is, one side surface of the sensor 310 may be arranged to face one side surface of the cover 320.

The sensor 310 and the cover 320 may include materials that may be suitable for insert molding. For example, for the insert molding, the sensor 310 may include a metal material, and the cover 320 may include a plastic material. However, the materials of the sensor 310 and the cover 320 are not limited thereto.

The shape of the sensor 310 of FIG. 5A is merely an example of the sensor 310 that is insert-molded into the cover 320. The sensor 310 may be insert-molded into the cover 320 in different forms by considering arrangements of other components arranged inside the housing 120.

Referring to FIGS. 5B and 5C, the cover 320 and the sensor 310 insert-molded into the cover 320 may include holes through which the coupling member 410 and/or the encapsulation portion 350.

The sensor 310 according to an embodiment may further include a structure 510. The structure 510 may protrude from the sensor 310 in a direction opposite to the cartridge 330. A portion of the structure 510 may contact the sensor 310, and another portion thereof may be connected to the electrical connection member 430. The structure 510 of FIGS. 5A and 5C is merely an example, and according to the arrangements of the components, the structure 510 may be arranged at different locations of the sensor 310.

The structure 510 may electrically connect the sensor 310 to the electrical connection member 430 that electrically connects the sensor 310 to the PCB 230. The data regarding the capacitance of the cartridge 330, which is measured by the sensor 310, may be received by the processor included in the PCB 230, through the structure 510 and the electrical connection member 430.

The sensor 310 may include one or more pairs of electrodes. The sensor 310 may measure capacitance of each pair of electrodes and thus may provide information regarding permittivity of materials existing near (i.e., in the vicinity of) the electrodes.

The sensor 310 may include one or more pairs of electrodes consecutively arranged. For example, the sensor 310 insert-molded into the cover 320 may measure the capacitance of the cartridge 330 located near the sensor 310 and thus may provide information regarding permittivity of the aerosol generating material inside the cartridge 330. As the sensor 310, which is insert-molded into the cover 320, has an area corresponding to an area of a side surface of the cartridge 330, the accuracy of measuring the remaining amount of aerosol generating material inside the cartridge 330 may be improved.

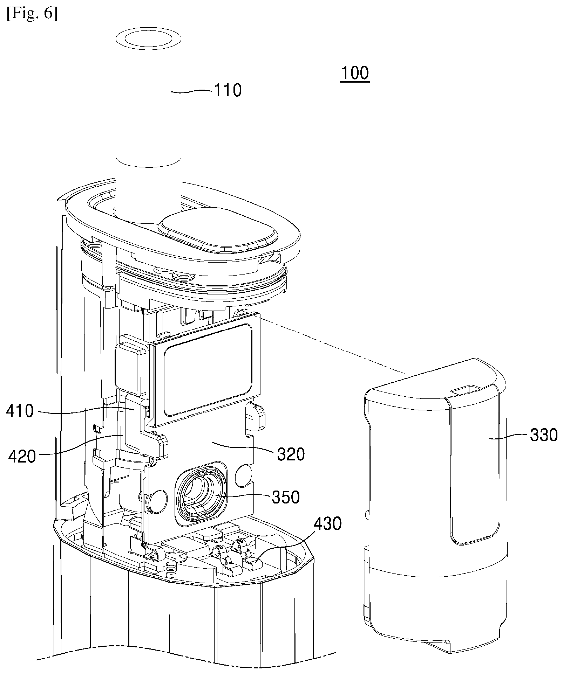

FIG. 6 shows an arrangement of some components of an aerosol generating device, according to an embodiment. The aerosol generating device 100 of FIG. 6 may be substantially the same as or similar to the aerosol generating device 100 of FIG. 4, and repeated descriptions thereof may be omitted.

The sensor 310 may measure the capacitance of the cartridge 330 and thus detect the remaining amount of aerosol generating material inside the cartridge 330. The sensor 310 may be arranged not to be externally exposed to improve the accuracy of measuring the remaining amount of aerosol generating material.

The sensor 310 may be insert-molded into the cover 320 and measure the capacitance of the cartridge 330. As a side surface of the sensor 310, which is insert-molded into the cover 320, is covered by the cover 320 and the other side surface of the sensor 310 is covered by the sensor cover 420, the sensor 310 may not be externally exposed.

As the sensor 310 is closer to the cartridge 330, the sensor 310 may have the improved accuracy of measuring the remaining amount of aerosol generating material. Also, the absence of other components between the sensor 310 and the cartridge 330 may increase the accuracy of measuring, by the sensor 310, the remaining amount of aerosol generating material.

Referring to FIG. 6, a side surface of the sensor 310, which is insert-molded into the cover 320, may face a side surface of the cartridge 330. As a side surface of the sensor 310 has an area corresponding to an area of a side surface of the cartridge 330, the accuracy of measuring the remaining amount of aerosol generating material inside the cartridge 330 may be improved.

Also, referring to FIG. 6, the sensor 310, the cover 320, and the cartridge 330 may be arranged such that the cover 320 may only exist between the sensor 310 and the cartridge 330. As such, a distance between the sensor 310, which is insert-molded into the cover 320, and the cartridge 330 may be minimized, and the number of other components existing between the sensor 310 and the cartridge 330 may be minimized. Accordingly, the sensor 310 may have the improved accuracy of measuring the remaining amount of aerosol generating material.

The more the sensor 310 contacts the aerosol generating material, the lower the accuracy of measuring the remaining amount of aerosol generating material by the sensor 310 may become. The above arrangement may minimize the distance between the sensor 310 and the cartridge 330 and the contact of the sensor 310 with the aerosol generating material, and thus, the sensor 310 may have the improved accuracy of measuring the remaining amount of aerosol generating material.

The coupling member 410 may fix the cartridge 330 to the aerosol generating device 100. The coupling member 410 may fix the sensor 310, which is insert-molded into the cover 320, and the cover 320 to the aerosol generating device 100 together with the cartridge 330.

According to an embodiment, the sensor 310, which is insert-molded into the cover 320, may include the structure 510. Based on the above arrangement, the sensor 310, which is insert-molded into the cover 320, may collect more accurate data regarding the capacitance of the cartridge 330. The processor arranged in the PCB 230 may receive the collected data through the structure 510 and the electrical connection member 430.

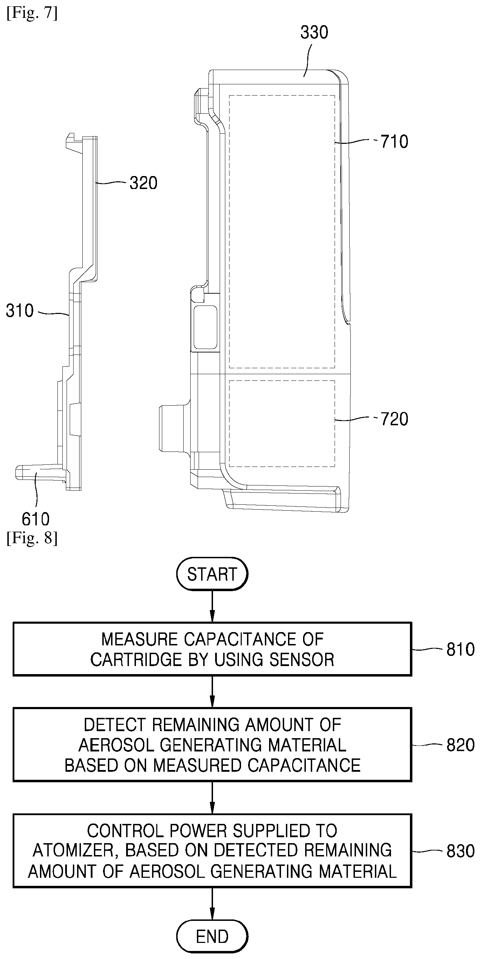

FIG. 7 shows an example of a cartridge and a sensor. FIG. 7 shows an example of the shape of the sensor 310, the cover 320, and the cartridge 330 of FIG. 6.

In the aerosol generating device 100 according to an embodiment, one side surface of the sensor 310, which is insert-molded into the cover 320, may face one side surface of the cartridge 330. To increase the accuracy of measuring the remaining amount of aerosol generating material by the sensor 310 that is insert-molded into the cover 320, the cover 320 may be arranged to contact one side surface of the cartridge 330.

As the distance between the sensor 310 and the cartridge 330 decreases, the sensor 310 may have the improved accuracy of measuring the remaining amount of aerosol generating material. The shape of the side surface of the cover 320 may correspond to that of the side surface of the cartridge 330 such that the distance between the sensor 310, which is insert-molded, and the cartridge 330 may be minimized.

A side surface of the sensor 310 which is insert-molded into the cover 320 may have an area corresponding to an area of a side surface of the cartridge 330 contacting the cover 320. The sensor 310 having such an area may fully measure the remaining amount of aerosol generating material inside the cartridge 330.

The cartridge 330 may include a storage 710 in which an aerosol generating material is stored, and an atomizer 720 for vaporizing the aerosol generating material. The aerosol generating device 100 may generate an aerosol from the aerosol generating material by using the cartridge 330. The aerosol generated by the cartridge 330 may be delivered to a user.

The storage 710 may store the aerosol generating material. When smoking is performed using the aerosol generating device 100, the aerosol generated from the aerosol generating device 100 may be delivered to the user, and the aerosol generating material stored in the storage 710 may be consumed accordingly; thus, the amount of aerosol generating material remaining in the storage 710 may be reduced.

The cartridge 330 may be detachably attached to the aerosol generating device 100. The cartridge 330 may be a consumable that is periodically replaced as the aerosol generating device 100 is used. When the aerosol generating material stored in the storage 710 of the cartridge 330 is completely consumed, the user may replace the cartridge 330.

FIG. 8 is a flowchart for explaining an operating method of an aerosol generating device, according to an embodiment.

Referring to FIG. 8, an operating method of the aerosol generating device may include operations 810 to 830. However, one or more embodiments are not limited thereto, and other general-purpose operations than the operations shown in FIG. 8 may be further included in the operating method of the aerosol generating device.

In operation 810, the aerosol generating device 100 may measure the capacitance of the cartridge 330 (e.g., the storage 710 containing the aerosol generating material) by using the sensor 310.

In operation 820, the aerosol generating device 100 may detect the remaining amount of aerosol generating material, based on the measured capacitance of the cartridge 330.

In operation 830, the aerosol generating device 100 may control power, which is supplied to the atomizer 720 according to the remaining amount of aerosol generating material, by using the processor arranged on the PCB 230.

The operating method of the aerosol generating device shown in FIG. 8 may be recorded on a computer-readable recording medium on which at least one program including instructions for implementing the method is recorded.

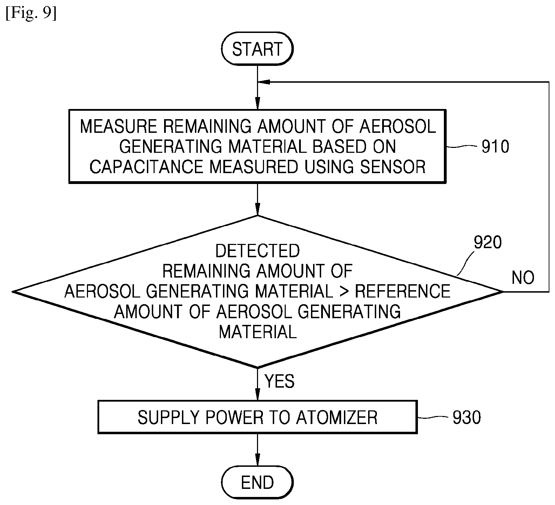

FIG. 9 is a flowchart for explaining an operating method of an aerosol generating device, according to an embodiment. Hereinafter, the operating method of the aerosol generating device 100 shown in FIG. 9 is described by referring to the components of the aerosol generating device 100 of FIG. 5 and/or FIG. 6.

Referring to FIG. 9, in operation 910, the aerosol generating device 100 may measure the capacitance of the cartridge 330 by using the sensor 310 and measure the remaining amount of aerosol generating material stored in the storage of the cartridge 330, based on the measured capacitance.

In this case, the processor arranged on the PCB 230 may receive the data regarding the capacitance of the cartridge 330 through the structure 510 and the electrical connection member 430, the capacitance being measured by the sensor 310. The processor may detect the remaining amount of aerosol generating material, based on the data regarding the measured capacitance.

In operation 920, the processor of the aerosol generating device 100 according to an embodiment may compare the remaining amount of aerosol generating device, which is detected in operation 910, with a reference amount that is determined based on experiments. The reference amount may indicate a minimum of the amount of aerosol generating material that can generate a sufficient amount of aerosols. For example, the reference amount may indicate a minimum of the aerosol generating material that can be vaporized by the atomizer 720. Also, a designated value representing the reference amount may be stored in the processor and may be changed according to a type of the aerosol generating device 100, a user environment, or user's manipulation.

When it is determined that the remaining amount of aerosol generating material, which is detected in operation 920, is equal to or less than the reference amount, the processor may supply, to the atomizer 720, power corresponding to the remaining amount of aerosol generating material in operation 930. To this end, when the aerosol generating is turned on or when a puff is detected, the processor may determine whether the remaining amount of aerosol generating material, which is detected by the sensor 310, is greater than or equal to the reference amount of aerosol generating material.

In an embodiment, the processor may output, through the display of the aerosol generating device 100, a visual notification informing the user that power is supplied to the atomizer 720 in the aerosol generating device 100, but one or more embodiments are not limited thereto. In another embodiment, the processor may output, through a speaker, a sound notification informing the user that the aerosol generating device 100 operates or may generate vibration through a motor to output a tactile notification.

On the contrary, when it is determined that the remaining amount of aerosol generating material, which is detected in operation 920, is less than the reference amount of aerosol generating material, the aerosol generating device 100 may not operate to heat the aerosol generating material.

In an embodiment, the processor may output, through the display of the aerosol generating device 100, a visual notification informing the user that a new cartridge is required due to a lack of aerosol generating materials in the aerosol generating device 100, but one or more embodiments are not limited thereto. The processor may output a sound notification or a tactile notification. When the amount of aerosol generating material is sufficient because the cartridge 330 is replaced with a new one, the processor may repeatedly perform operations 910 and 920 to control power to be supplied to the atomizer 720, based on the remaining amount.

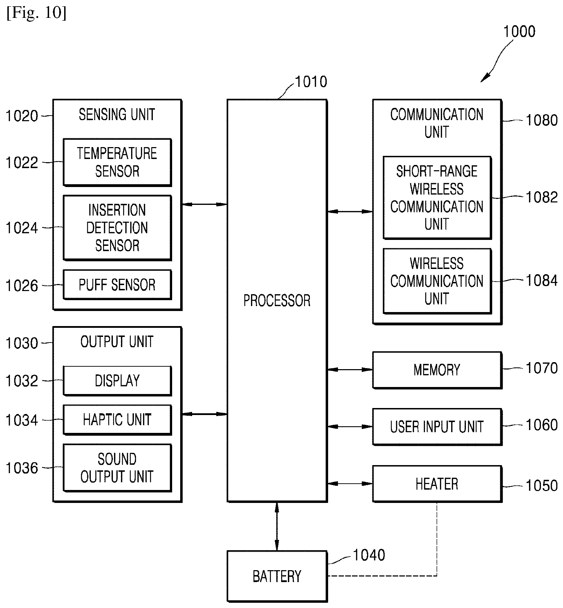

FIG. 10 is a block diagram of an aerosol generating device 100 according to another embodiment.

The aerosol generating device 100 may include a controller 1010, a sensing unit 1020, an output unit 1030, a battery 1040, a heater 1050, a user input unit 1060, a memory 1070, and a communication unit 1080. However, the internal structure of the aerosol generating device 100 is not limited to those illustrated in FIG. 10. That is, according to the design of the aerosol generating device 100, it will be understood by one of ordinary skill in the art that some of the components shown in FIG. 10 may be omitted or new components may be added.

The sensing unit 1020 may sense a state of the aerosol generating device 100 and a state around the aerosol generating device 100, and transmit sensed information to the controller 1010. Based on the sensed information, the controller 1010 may control the aerosol generating device 100 to perform various functions, such as controlling an operation of the heater 1050, limiting smoking, determining whether an aerosol generating article (e.g., a cigarette, a cartridge, or the like) is inserted, displaying a notification, or the like.

The sensing unit 1020 may include at least one of a temperature sensor 1022, an insertion detection sensor 1024, and a puff sensor 1026, but is not limited thereto.

The temperature sensor 1022 may sense a temperature at which the heater 1050 (or an aerosol generating material) is heated. The aerosol generating device 100 may include a separate temperature sensor for sensing the temperature of the heater 1050, or the heater 1050 may serve as a temperature sensor. Alternatively, the temperature sensor 1022 may also be arranged around the battery 1040 to monitor the temperature of the battery 1040.

The insertion detection sensor 1024 may sense insertion and/or removal of an aerosol generating article. For example, the insertion detection sensor 1024 may include at least one of a film sensor, a pressure sensor, an optical sensor, a resistive sensor, a capacitive sensor, an inductive sensor, and an infrared sensor, and may sense a signal change according to the insertion and/or removal of an aerosol generating article.

The puff sensor 1026 may sense a user's puff on the basis of various physical changes in an airflow passage or an airflow channel. For example, the puff sensor 1026 may sense a user's puff on the basis of any one of a temperature change, a flow change, a voltage change, and a pressure change.

The sensing unit 1020 may include, in addition to the temperature sensor 1022, the insertion detection sensor 1024, and the puff sensor 1026 described above, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 1030 may output information on a state of the aerosol generating device 100 and provide the information to a user. The output unit 1030 may include at least one of a display unit 1032, a haptic unit 1034, and a sound output unit 1036, but is not limited thereto. When the display unit 1032 and a touch pad form a layered structure to form a touch screen, the display unit 1032 may also be used as an input device in addition to an output device.

The display unit 1032 may visually provide information about the aerosol generating device 100 to the user. For example, information about the aerosol generating device 100 may mean various pieces of information, such as a charging/discharging state of the battery 1040 of the aerosol generating device 100, a preheating state of the heater 1050, an insertion/removal state of an aerosol generating article, or a state in which the use of the aerosol generating device 100 is restricted (e.g., sensing of an abnormal object), or the like, and the display unit 1032 may output the information to the outside. The display unit 1032 may be, for example, a liquid crystal display panel (LCD), an organic light-emitting diode (OLED) display panel, or the like. In addition, the display unit 1032 may be in the form of a light-emitting diode (LED) light-emitting device.

The haptic unit 1034 may tactilely provide information about the aerosol generating device 100 to the user by converting an electrical signal into a mechanical stimulus or an electrical stimulus. For example, the haptic unit 1034 may include a motor, a piezoelectric element, or an electrical stimulation device.

The sound output unit 1036 may audibly provide information about the aerosol generating device 100 to the user. For example, the sound output unit 1036 may convert an electrical signal into a sound signal and output the same to the outside.

The battery 1040 may supply power used to operate the aerosol generating device 100. The battery 1040 may supply power such that the heater 1050 may be heated. In addition, the battery 1040 may supply power required for operations of other components (e.g., the sensing unit 1020, the output unit 1030, the user input unit 1060, the memory 1070, and the communication unit 1080) in the aerosol generating device 100. The battery 1040 may be a rechargeable battery or a disposable battery. For example, the battery 1040 may be a lithium polymer (LiPoly) battery, but is not limited thereto.

The heater 1050 may receive power from the battery 1040 to heat an aerosol generating material. Although not illustrated in FIG. 10, the aerosol generating device 100 may further include a power conversion circuit (e.g., a direct current (DC)/DC converter) that converts power of the battery 1040 and supplies the same to the heater 100. In addition, when the aerosol generating device 100 generates aerosols in an induction heating method, the aerosol generating device 100 may further include a DC/alternating current (AC) that converts DC power of the battery 1040 into AC power.

The controller 1010, the sensing unit 1020, the output unit 1030, the user input unit 1060, the memory 1070, and the communication unit 1080 may each receive power from the battery 1040 to perform a function. Although not illustrated in FIG. 10, the aerosol generating device 100 may further include a power conversion circuit that converts power of the battery 1040 to supply the power to respective components, for example, a low dropout (LDO) circuit, or a voltage regulator circuit.

In an embodiment, the heater 1050 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 1050 may be implemented by a metal wire, a metal plate on which an electrically conductive track is arranged, a ceramic heating element, or the like, but is not limited thereto.

In another embodiment, the heater 1050 may be a heater of an induction heating type. For example, the heater 1050 may include a susceptor that heats an aerosol generating material by generating heat through a magnetic field applied by a coil.

The user input unit 1060 may receive information input from the user or may output information to the user. For example, the user input unit 1060 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 10, the aerosol generating device 100 may further include a connection interface, such as a universal serial bus (USB) interface, and may connect to other external devices through the connection interface, such as the USB interface, to transmit and receive information, or to charge the battery 1040.

The memory 1070 is a hardware component that stores various types of data processed in the aerosol generating device 100, and may store data processed and data to be processed by the controller 1010. The memory 1070 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 1070 may store an operation time of the aerosol generating device 100, the maximum number of puffs, the current number of puffs, at least one temperature profile, data on a user's smoking pattern, etc.

The communication unit 1080 may include at least one component for communication with another electronic device. For example, the communication unit 1080 may include a short-range wireless communication unit 1082 and a wireless communication unit 1084.

The short-range wireless communication unit 1082 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or the like, but is not limited thereto.

The wireless communication unit 1084 may include a cellular network communication unit, an Internet communication unit, a computer network (e.g., local area network (LAN) or wide area network (WAN)) communication unit, or the like, but is not limited thereto. The wireless communication unit 1084 may also identify and authenticate the aerosol generating device 100 within a communication network by using subscriber information (e.g., International Mobile Subscriber Identifier (IMSI)).

The controller 1010 may control general operations of the aerosol generating device 100. In an embodiment, the controller 1010 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The controller 1010 may control the temperature of the heater 1050 by controlling supply of power of the battery 1040 to the heater 1050. For example, the controller 1010 may control power supply by controlling switching of a switching element between the battery 1040 and the heater 1050. In another example, a direct heating circuit may also control power supply to the heater 1050 according to a control command of the controller 1010.

The controller 1010 may analyze a result sensed by the sensing unit 1020 and control subsequent processes to be performed. For example, the controller 1010 may control power supplied to the heater 1050 to start or end an operation of the heater 1050 on the basis of a result sensed by the sensing unit 1020. As another example, the controller 1010 may control, based on a result sensed by the sensing unit 1020, an amount of power supplied to the heater 1050 and the time the power is supplied, such that the heater 1050 may be heated to a certain temperature or maintained at an appropriate temperature.

The controller 1010 may control the output unit 1030 on the basis of a result sensed by the sensing unit 1020. For example, when the number of puffs counted through the puff sensor 1026 reaches a preset number, the controller 1010 may notify the user that the aerosol generating device 100 will soon be terminated through at least one of the display unit 1032, the haptic unit 1034, and the sound output unit 1036.

One embodiment may also be implemented in the form of a computer-readable recording medium including instructions executable by a computer, such as a program module executable by the computer. The computer-readable recording medium may be any available medium that may be accessed by a computer and includes both volatile and nonvolatile media, and removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

Examples of the computer-readable recording medium include magnetic media (e.g., hard disks, magnetic tapes, etc.), optical media (e.g., CD-ROMs, DVDs, etc.), magneto-optical media (e.g., floptical disks), and hardware devices (e.g., ROM, RAM, flash memory, etc.) specifically designed to store and implement program instructions. Examples of program instructions may include not only machine language code generated by a compiler but also high-level language code executed by a computer by using an interpreter, etc. The descriptions of the above-described embodiments are merely examples, and it will be understood by one of ordinary skill in the art that various changes may be made without departing from the scope defined by the appended claims.

## Claims

1. An aerosol generating device (100) comprising:
a housing (120) comprising an accommodation space;
a cartridge (330) detachably coupled to the accommodation space of the housing (120), and comprising a storage (710) configured to store an aerosol generating material, and an atomizer (720) configured to vaporize the aerosol generating material;
a sensor (310) arranged adjacent to the accommodation space of the housing (120) and configured to detect capacitance of the storage (710);
a cover (320) arranged between the cartridge (330) and the sensor (310) and configured to protect the sensor (310), wherein the sensor (310) is integrally formed with the cover (320) through insert molding; and
a processor electrically connected to the sensor (310), and configured to detect a remaining amount of the aerosol generating material in the storage (710), based on the capacitance of the storage (710) detected by the sensor (310).

2. The aerosol generating device of claim 1, wherein a first side surface of the cover (320) is arranged to face the sensor (310), and
a second side surface of the cover (320), which is opposite to the first side surface, is arranged to face the accommodation space.

3. The aerosol generating device of claim 2, wherein, when the cartridge (330) is accommodated in the accommodation space, the second side surface of the cover (320) contacts a portion of the cartridge (330).

4. The aerosol generating device of claim 3, wherein the second side surface of the cover (320) has a shape corresponding to the portion of the cartridge (330).

5. The aerosol generating device of claim 1, wherein the sensor (310) is apart from the accommodation space by a predetermined distance.

6. The aerosol generating device of claim 1, wherein the cover (320) is arranged to cover a portion of the sensor (310), the portion facing the accommodation space.

7. The aerosol generating device of claim 1, wherein the sensor(310) comprises a metal material, and
the cover (320) comprises a plastic material.

8. The aerosol generating device of claim 6, further comprising a coupling member (410) configured to fix the cartridge (330) to the housing (120),
wherein the cover (320) further comprises a hole through which the coupling member (410) passes.

9. The aerosol generating device of claim 1, further comprising:
a battery (220) arranged inside the housing (120); and
a printed circuit board (230) arranged inside the housing (120),
wherein the processor is arranged on the printed circuit board (230).

10. The aerosol generating device of claim 9, further comprising an electrical connection member (430) electrically connecting the sensor (310) and the printed circuit board (230),
wherein the processor is electrically connected to the sensor (310) through the electrical connection member (430).

11. The aerosol generating device of claim 10, wherein the sensor (310) further is provided with a structure (510) protruding in a direction opposite to the accommodation space,
a portion of the structure contacts the sensor (310), and
another portion of the structure (510) contacts the electrical connection member (430).

12. The aerosol generating device of claim 9, wherein the processor is further configured to, when the remaining amount of aerosol generating material in the storage (710) is greater than or equal to a predetermined reference amount, supply power to the atomizer (720) through the battery (220).

## Patentansprüche

1. Aerosol erzeugende Vorrichtung (100), die Folgendes umfasst:
ein Gehäuse (120), das einen Aufnahmeraum umfasst;
eine Kartusche (330), die lösbar mit dem Aufnahmeraum des Gehäuses (120) gekoppelt ist und ein Aufbewahrungsfach (710), das dazu konfiguriert ist, ein Aerosol erzeugendes Material aufzubewahren, und einen Verdampfer (720) umfasst, der dazu konfiguriert ist, das Aerosol erzeugende Material zu verdampfen;
einen Sensor (310), der benachbart zum Aufnahmeraum des Gehäuses (120) angeordnet und dazu konfiguriert ist, die Kapazität des Aufbewahrungsfachs (710) zu erkennen;
eine Abdeckung (320), die zwischen der Kartusche (330) und dem Sensor (310) angeordnet und dazu konfiguriert ist, den Sensor (310) zu schützen, wobei der Sensor (310) durch Einlegeformen einstückig mit der Abdeckung (320) ausgebildet ist; und
einen Prozessor, der elektrisch mit dem Sensor (310) verbunden und dazu konfiguriert ist, die verbleibende Menge des Aerosol erzeugenden Materials in dem Aufbewahrungsfach (710) basierend auf der vom Sensor (310) erkannten Kapazität des Aufbewahrungsfachs (710) zu erkennen.

2. Aerosol erzeugende Vorrichtung nach Anspruch 1, wobei eine erste Seitenfläche der Abdeckung (320) so angeordnet ist, dass sie dem Sensor (310) zugewandt ist, und
eine zweite Seitenfläche der Abdeckung (320), die der ersten Seitenfläche gegenüberliegt, so angeordnet ist, dass sie dem Aufnahmeraum zugewandt ist.

3. Aerosol erzeugende Vorrichtung nach Anspruch 2, wobei, wenn die Kartusche (330) im Aufnahmeraum untergebracht ist, die zweite Seitenfläche der Abdeckung (320) einen Abschnitt der Kartusche (330) berührt.

4. Aerosol erzeugende Vorrichtung nach Anspruch 3, wobei die zweite Seitenfläche der Abdeckung (320) eine Form aufweist, die dem Abschnitt der Kartusche (330) entspricht.

5. Aerosol erzeugende Vorrichtung nach Anspruch 1, wobei der Sensor (310) um einen vorbestimmten Abstand von dem Aufnahmeraum getrennt ist.

6. Aerosol erzeugende Vorrichtung nach Anspruch 1, wobei die Abdeckung (320) so angeordnet ist, dass sie einen Abschnitt des Sensors (310) abdeckt, wobei der Abschnitt dem Aufnahmeraum zugewandt ist.

7. Aerosol erzeugende Vorrichtung nach Anspruch 1, wobei der Sensor (310) ein Metallmaterial umfasst, und
die Abdeckung (320) ein Kunststoffmaterial umfasst.

8. Aerosol erzeugende Vorrichtung nach Anspruch 6, die ferner ein Kupplungselement (410) umfasst, das dazu konfiguriert ist, die Kartusche (330) am Gehäuse (120) zu befestigen,
wobei die Abdeckung (320) ferner ein Loch umfasst, durch das das Kupplungselement (410) verläuft.

9. Aerosol erzeugende Vorrichtung nach Anspruch 1, die ferner Folgendes umfasst:
eine Batterie (220), die innerhalb des Gehäuses (120) angeordnet ist; und
eine Leiterplatte (230), die innerhalb des Gehäuses (120) angeordnet ist,
wobei der Prozessor auf der Leiterplatte (230) angeordnet ist.

10. Aerosol erzeugende Vorrichtung nach Anspruch 9, die ferner ein elektrisches Verbindungselement (430) umfasst, das den Sensor (310) und die Leiterplatte (230) elektrisch miteinander verbindet,
wobei der Prozessor durch das elektrische Verbindungselement (430) elektrisch mit dem Sensor (310) verbunden ist.

11. Aerosol erzeugende Vorrichtung nach Anspruch 10, wobei der Sensor (310) ferner mit einer Struktur (510) versehen ist, die in einer dem Aufnahmeraum gegenüberliegenden Richtung vorsteht,
ein Abschnitt der Struktur den Sensor (310) berührt, und
ein weiterer Abschnitt der Struktur (510) das elektrische Verbindungselement (430) berührt.

12. Aerosol erzeugende Vorrichtung nach Anspruch 9, wobei der Prozessor ferner dazu konfiguriert ist, dem Verdampfer (720) Strom über die Batterie (220) zuzuführen, wenn die verbleibende Menge des Aerosol erzeugenden Materials im Aufbewahrungsfach (710) größer oder gleich einer vorbestimmten Referenzmenge ist.

## Revendications

1. Dispositif de génération d'aérosol (100) comprenant :
un logement (120) comprenant un espace de réception ;
une cartouche (330) accouplée de façon détachable à l'espace de réception du logement (120), et comprenant un moyen de stockage (710) configuré pour stocker un matériau de génération d'aérosol, et un atomiseur (720) configuré pour vaporiser le matériau de génération d'aérosol ;
un capteur (310) disposé de façon adjacente à l'espace de réception du logement (120) et configuré pour détecter la capacité du moyen de stockage (710) ;
un couvercle (320) disposé entre la cartouche (330) et le capteur (310) et configuré pour protéger le capteur (310), le capteur (310) étant formé intégralement avec le couvercle (320) par moulage par insertion ; et
un processeur connecté électriquement au capteur (310), et configuré pour détecter une quantité résiduelle du matériau de génération d'aérosol dans le moyen de stockage (710), sur la base de la capacité du moyen de stockage (710) détectée par le capteur (310).

2. Dispositif de génération d'aérosol selon la revendication 1, dans lequel une première surface latérale du couvercle (320) est disposée de manière à faire face au capteur (310), et
une deuxième surface latérale du couvercle (320), opposée à la première surface latérale, est disposée de manière à faire face à l'espace de réception.

3. Dispositif de génération d'aérosol selon la revendication 2, dans lequel, lorsque la cartouche (330) est reçue dans l'espace de réception, la deuxième surface latérale du couvercle (320) touche une partie de la cartouche (330).

4. Dispositif de génération d'aérosol selon la revendication 3, dans lequel la deuxième surface latérale du couvercle (320) présente une forme correspondant à la partie de la cartouche (330).

5. Dispositif de génération d'aérosol selon la revendication 1, dans lequel le capteur (310) est séparé de l'espace de réception selon une distance prédéterminée.

6. Dispositif de génération d'aérosol selon la revendication 1, dans lequel le couvercle (320) est disposé de manière à recouvrir une partie du capteur (310), la partie étant tournée vers l'espace de réception.

7. Dispositif de génération d'aérosol selon la revendication 1, dans lequel le capteur (310) comprend un matériau métallique, et
le couvercle (320) comprend un matériau plastique.

8. Dispositif de génération d'aérosol selon la revendication 6, comprenant en outre un élément d'accouplement (410) configuré pour fixer la cartouche (330) au logement (120),
dans lequel le couvercle (320) comprend en outre un orifice à travers lequel passe l'élément d'accouplement (410).

9. Dispositif de génération d'aérosol selon la revendication 1, comprenant en outre :
une batterie (220) disposée à l'intérieur du logement (120) ; et
une carte de circuit imprimé (230) disposée à l'intérieur du logement (120),
dans lequel le processeur est disposé sur la carte de circuit imprimé (230).

10. Dispositif de génération d'aérosol selon la revendication 9, comprenant en outre un élément de connexion électrique (430) connectant électriquement le capteur (310) et la carte de circuit imprimé (230),
dans lequel le processeur est connecté électriquement au capteur (310) par le biais de l'élément de connexion électrique (430).

11. Dispositif de génération d'aérosol selon la revendication 10, dans lequel le capteur (310) est en outre doté d'une structure (510) faisant saillie dans une direction opposée à l'espace de réception,
une partie de la structure touche le capteur (310), et
une autre partie de la structure (510) touche l'élément de connexion électrique (430).

12. Dispositif de génération d'aérosol selon la revendication 9, dans lequel le processeur est en outre configuré pour fournir de la puissance à l'atomiseur (720) par le biais de la batterie (220) lorsque la quantité résiduelle de matériau de génération d'aérosol dans le moyen de stockage (710) est supérieure ou égale à une quantité de référence prédéterminée.
